# EUROPEAN PATENT SPECIFICATION

(11) **EP 3 486 706 B1**
(45) Date of publication and mention of the grant of the patent: **08.05.2024**
(21) Application number: 17202113.1
(22) Date of filing: 16.11.2017
(51) Int. Cl.: G02B 27/00, G02B 21/18, G02B 21/36, G01B 11/24, G02B 26/08

(54) **FUNCTIONAL MODULE AND MICROSCOPE EQUIPPED WITH THE SAME**
FUNKTIONALES MODUL UND DAMIT AUSGESTATTETES MIKROSKOP
MODULE FONCTIONNEL ET MICROSCOPE EN ÉTANT ÉQUIPÉ

(43) Date of publication of application: 22.05.2019
(73) Proprietor: SD Optics, Inc., Seoul (KR); Stereo Display, Inc., Anaheim, CA 92801 (US)
(72) Inventor: GAIDUK, Alexander, 07749 Jena (DE); SEO, Cheong Soo, Brea, 92821 (US); CHO, Gyoungil, Fullerton, 92833 (US); SOHN, Jin Young, Fullerton, 92833 (US); LIPPERT, Helmut, 07745 Jena (DE)
(74) Representative: Engel, Christoph Klaus

(56) References cited:
- US-A1- 2006 018 651
- US-A1- 2007 279 733
- US-A1- 2011 096 393
- WEBB S E D ET AL: "MULTIDIMENSIONAL SINGLE-MOLECULE IMAGING IN LIVE CELLS USING TOTAL-INTERNAL-REFLECTION FLUORESCENCE MICROSCOPY", OPTICS LETTERS, OPTICAL SOCIETY OF AMERICA, vol. 31, no. 14, 15 July 2006 (2006-07-15) , pages 2157-2159, XP001249642, ISSN: 0146-9592, DOI: 10.1364/OL.31.002157
- WILLIAM J. SHAIN ET AL: "Extended depth-of-field microscopy with a high-speed deformable mirror", OPTICS LETTERS, vol. 42, no. 5, 1 March 2017 (2017-03-01), page 995, XP055476243, ISSN: 0146-9592, DOI: 10.1364/OL.42.000995
- M. P. BACKLUND ET AL: "Simultaneous, accurate measurement of the 3D position and orientation of single molecules", PROCEEDINGS OF THE NATIONAL ACADEMY OF SCIENCES, vol. 109, no. 47, 5 November 2012 (2012-11-05), pages 19087-19092, XP055137850, ISSN: 0027-8424, DOI: 10.1073/pnas.1216687109

## Description

The present invention concerns a functional module for a microscope. That functional module can be mounted to a module support of the microscope. Furthermore, the present invention concerns a microscope that comprises the functional module.

DE 197 33 193 A1 teaches a microscope with an adaptive optics. A transmitting wave front modulator is located between an objective and a tube lens. The microscope can be used for confocal microscopy, for laser-supported microscopy, for conventional microscopy, or for analytic microscopy.

US 7,345,816 B2 shows an optical microscope that includes a light source which irradiates a sample with illuminating light. A mirror, which has a variable reflection surface, reflects the illuminating light. A correction table stores plural data of plural shapes of the reflection surface which correspond to changes in a focal position and an aberration.

US 7,269,344 B2 teaches an optical apparatus that has an imaging optical system provided with a deformable mirror and an electronic zoom function. A ray deflecting function of the deformable mirror is changed in accordance with a change of an object area corresponding to an image to be used. This solution aims at a high sharpness of a taken image even when a variable magnification ratio is increased.

WO 2005/119331 A1 teaches a variable focal length lens comprising a plurality of micromirrors with two degrees of freedom rotation and one degree of freedom translation. The two degrees of freedom rotation and one degree of freedom translation of the micromirrors are controlled to change the foal length of the lens and to satisfy the same phase conditions for the lights. The lens is diffractive Fresnel lens.

WO 2007/134264 A2 shows a three-dimensional imaging system with a variable focal length micromirror array lens. The micro mirror array lens comprises a plurality of micromirrors, wherein each of the micromirrors is controlled to change the focal length of the micromirror array lens. The imaging system further comprises an imaging unit and an image processing unit which produces three-dimensional image data using the images captured by the imaging unit and the focal length information of the micromirror array lens.

Webb et al: "Multidimensional single-molecule imaging in live cells using total-internal-reflection fluorescence microscopy", Optics Letters Vol. 13, No. 4 (2006) discloses a microscope with multiple detection beam paths. T

US 2007/279733 A1 discloses a microscope with an extended depth of field using micromirrors.

An object of the present invention is to provide a functional module for a microscope and a corresponding microscope that allow an effective recording of images with an enhanced depth of field.

The aforementioned object is achieved by a functional module according to the enclosed claim 1 and by a microscope according to the enclosed claim 14 .

The functional module according to the invention is applicable to be mounted to a microscope or to a base body of a microscope. Especially, the functional module according to the invention is applicable to a microscope or a base body of a microscope that comprises an objective. Therefore, the functional module comprises a mechanical interface for removable mounting the functional module to a module support of the microscope, especially; for attachment of the functional module to a mechanical connection at the microscope. The module support is formed at the microscope, especially, at the base body of the microscope that comprises the objective. Furthermore, the functional module comprises an optical interface for establishing an optical path from the objective of the microscope to the functional module. The optical interface is preferably integrated into the mechanical interface.

The functional module according to the invention further comprises at least one image sensor for converting an image transferred via the optical interface to the images sensor into an electrical signal. From there, the image sensor converts an image taken by the objective into an electrical signal. The image sensor is preferably a semiconductor, e.g., a CMOS. The image sensor is preferably a polarization sensitive image sensor.

The functional module according to the invention further comprises a first microelectromechanical optical system and a second microelectromechanical optical system. The first microelectromechanical optical system is configured for enhancing a depth of field on a first optical subpath. The first optical subpath is directed to the image sensor. From there, the first microelectromechanical optical system is configured for enhancing a depth of field using the optical interface, the first optical subpath and the image sensor. The second microelectromechanical optical system is configured for enhancing a depth of field on a second optical subpath. The second optical subpath is also directed to the image sensor. From there, the second microelectromechanical optical system is configured for enhancing a depth of field using the optical interface, the second optical subpath and the image sensor. The first optical subpath and the second optical subpath are derived from the optical path that crosses the optical interface. Each of the first microelectromechanical optical system and the second microelectromechanical optical system directs images to the image sensor, wherein these images are appropriate for generating an image with enhanced depth of field. Preferably, the images directed by first microelectromechanical optical system and the images directed by the second microelectromechanical optical system represent the same images taken by the objective of the microscope. Alternatively, the images directed by the first microelectromechanical optical system and the images directed by the second microelectromechanical optical system represent different areas of the images taken by the objective of the microscope. Alternatively, the images directed by the first microelectromechanical optical system and the images directed by the second microelectromechanical optical system represent different magnifications at the image sensor of the sample that is observed by the objective of the microscope. Alternatively, the images directed by the first microelectromechanical optical system and the images directed by the second microelectromechanical optical system represent different states of polarization of light or different spectral regions of light, or different phase state of light.

A special benefit of the functional module according to the invention is that images with an enhanced depth of field (EDoF) can be produced at a lower light level of a sample to be microscopically examined since more light can be collected by the at least two microelectromechanical optical systems. That can be close to 100% of light collected by the objective; considering ideal reflections and no losses due to scattering, vignetting, etc. A further benefit of the functional module according to the invention is that images with an enhanced depth of field (EDoF) can be produced in a shorter time since the focusing by the two microelectromechanical optical systems is faster.

In preferred embodiments of the functional module according to the invention, the functional module comprises at least two image sensors. The first optical subpath and the second optical subpath are directed to the first image sensor. From there, the first microelectromechanical optical system and the second microelectromechanical optical system are related to the first image sensor. Preferably, the functional module comprises at least three microelectromechanical optical systems. Preferably, one or more of the further microelectromechanical optical systems are related to the second image sensor.

In preferred embodiments of the functional module according to the invention each of the microelectromechanical optical systems comprises an array of moveable micromirrors. Each of the movable micromirrors shows two degrees of freedom rotation and one degree of freedom translation. The degree of freedom translation of the moveable micromirrors of the first microelectromechanical optical system is preferably along to the first optical subpath. The degree of freedom translation of the moveable micromirrors of the second microelectromechanical optical system is preferably along to the second optical subpath. The two degrees of freedom rotation of the moveable micromirrors of the first microelectromechanical optical system are preferably perpendicular to the first optical subpath. The two degrees of freedom rotation of the moveable micromirrors of the second microelectromechanical optical system are preferably perpendicular to the second optical subpath.

The microelectromechanical optical systems are preferably mirror array lens systems. Such mirror array lens systems are offered under the trademark MALS.

Preferably, the first microelectromechanical optical system and the second microelectromechanical optical system are equal. Alternatively, the first microelectromechanical optical system and the second microelectromechanical optical system are different mirror array lens systems.

Preferably, each of the microelectromechanical optical systems forms a Fresnel lens.

In the functional module according to the invention each of the microelectromechanical optical systems is directed towards a beam splitter, a colour beam splitter or a polarizing beam splitter. The beam splitter, the colour beam splitter or the polarizing beam splitter combines the two optical subpaths and directs the light towards the image sensor. The beam splitter, the colour beam splitter or the polarizing beam splitter splits the optical path crossing the optical interface into the first optical subpath that is directed to the first microelectromechanical optical system and into the second optical subpath that is directed to the second microelectromechanical optical system. Furthermore, the first microelectromechanical optical system is optically directed to the image sensor via the beam splitter, the colour beam splitter or the polarizing beam splitter. Also, the second microelectromechanical optical system is optically directed to the image sensor via the beam splitter, the colour beam splitter or the polarizing beam splitter.

Preferably, the beam splitter, the colour beam splitter or the polarizing beam splitter is located between the first microelectromechanical optical system and the optical interface. Preferably, the beam splitter, the colour beam splitter or the polarizing beam splitter is located between the second microelectromechanical optical system and the image sensor.

Preferably, the first optical subpath and the second optical subpath are perpendicular to each other and cross each other within the beam splitter, the colour beam splitter or the polarizing beam splitter.

Preferably, the first microelectromechanical optical system, and the beam splitter, the colour beam splitter or the polarizing beam splitter and the optical interface are arranged on a straight line. Preferably, the second microelectromechanical optical system, the beam splitter, and the colour beam splitter or the polarizing beam splitter, and the image sensor are arranged on a straight line.

Preferably, the beam splitter is preferably a polarizing beam splitter. The polarizing beam splitter polarizes light of the optical path.

In preferred embodiments of the functional module according to the invention a waveplate is located on the first optical subpath and/or on the second optical subpath. The one waveplate or each of the waveplates is preferably a λ/4 waveplate. Preferably, a first waveplate is located on the first optical subpath and a second waveplate is located on the second optical subpath. Preferably, the first waveplate is located on the first optical subpath between the first microelectromechanical optical system and the beam splitter. Preferably, the second waveplate is located on the second optical subpath between the second microelectromechanical optical system and the beam splitter.

In preferred embodiments of the functional module according to the invention the beam splitter is a polarizing beam splitter, and the functional module further comprises a first λ/4 waveplate that is located on the first optical subpath between the first microelectromechanical optical system and the beam splitter and a second λ/4 waveplate is located on the second optical subpath between the second microelectromechanical optical system and the beam splitter. That embodiment shows the special advantage that it can produce images with an enhanced depth of field at a very low light level of a sample to be microscopically examined since up to 75% more light can be collected by the two microelectromechanical optical systems in comparison to embodiments according to prior art comprising only one microelectromechanical optical system. Close to 100% of the light collected by the objective lens can be directed toward the image sensor.

In preferred embodiments of the functional module according to the invention a lens, a colour filter, an active acousto-optical modulator, an active electro-optical modulator and/or a passive or active interferometric element is located on the first optical subpath, on the second optical subpath and/or on the optical path. These further components can provide specific functionality.

The lens, the colour filter, the active acousto-optical modulator, the active electro-optical modulator and/or the passive or active interferometric element is preferably located between the first microelectromechanical optical system and the beam splitter, the colour beam splitter or the polarizing beam splitter, between the second microelectromechanical optical system and the beam splitter, the colour beam splitter or the polarizing beam splitter, between the beam splitter and the image sensor and/or at the optical interface. The lens, the colour filter, the active acousto-optical modulator, the active electro-optical modulator and/or the passive or active interferometric element is preferably located at the first subpath between the first microelectromechanical optical system and the beam splitter, the colour beam splitter or the polarizing beam splitter, and/or at the second optical subpath between the second microelectromechanical optical system and the beam splitter, the colour beam splitter or the polarizing beam splitter. The lens between the first microelectromechanical optical system and the beam splitter, the colour beam splitter or the polarizing beam splitter and the lens between the second microelectromechanical optical system and the beam splitter, the colour beam splitter or the polarizing beam splitter combined with the lens between the beam splitter, the colour beam splitter or the polarizing beam splitter and the image sensor and the lens at the optical interface may lead to various magnification for the first optical subpath and for the second optical subpath and sequential detection by the image sensor.

Preferred embodiments of the functional module according to the invention further comprise a control unit for a synchronized control of the two microelectromechanical optical systems and the image sensor. Preferably, the control unit is further configured for processing images converted by the image sensor. The two microelectromechanical optical systems can be synchronized in different ways depending on the exact functionality needed for the complete functional module.

Preferably, the control unit is further configured for forming a Fresnel lens or a grating by the first microelectromechanical optical system and for forming a Fresnel lens or a grating by the second microelectromechanical system.

Preferably, the control unit is further configured for taking a plurality of images with different values of focus resulting in a stack of images. The different values of focus are obtained by controlling the two microelectromechanical optical systems, especially, by moving the movable micromirrors of both microelectromechanical optical systems, more especially; by moving the movable micromirrors of both microelectromechanical optical systems to form Fresnel lenses or gratings each with varying values of the focal length. The focal positions of the two microelectromechanical optical systems can be the same or different depending on the functionality needed. The variation of the focal positions can be synchronized or independent.

Preferably, the control unit is further configured for processing the stack of images to an image with an enhanced depth of field.

Preferably, the control unit is further configured for processing the stack of images or the image with an enhanced depth of field to achieve a three-dimensional image. Preferably, the control unit is further configured for processing a plurality of the stacks of images or a plurality of the images with an enhanced depth of field to achieve a three-dimensional image.

Preferably, the control unit is further configured to follow a predefined focal position by the two microelectromechanical optical systems, or to follow different focal positions by the two microelectromechanical optical systems, or to search for at least one specific focal position by the two microelectromechanical optical systems. The two or more focal positions can be spatially separated, i. e. separated in xy plane. That separation is preferably obtained by using a fixed or adjustable optical arrangement or by polarization or by spectral range, or by a combination of those.

Alternatively, the control unit is preferably further configured for separating two or more of the focal positions based on a registration time resulting in a temporal separation. For this, the optical subpaths are individually blocked or switched off for a definite period of time. In order to provide such shutter functionality, the functional module preferably comprises a shutter, e. g. a mechanical shutter, an electro-optical shutter, or an acousto-optical shutter. Alternatively, that shutter functionality is based on spectral separation or on switching of the polarization of light.

Preferably, the control unit is further configured for providing a variable sensitivity of the functional module and the microscope provided with the functional module, respectively. Preferably, the control unit is further configured for providing a variable efficiency of generating images with an enhanced depth of field.

Preferably, the control unit is further configured for splitting images of the first optical subpath and images of the second optical subpath. That splitting is preferably obtained based on polarization, spectral range, phase of light or focal position.

Preferably, the control unit is further configured such that different areas of an image taken by the objective of the microscope are directed by the first microelectromechanical optical system and by the second microelectromechanical system.

Preferably, the control unit is further configured for enhancing efficiency of fluorescence detection.

Preferably, the control unit is further configured for different magnifications of the first optical subpath and of the second optical subpath. Preferably, the control unit is further configured for variable magnifications of the first optical subpath and of the second optical subpath.

Preferably, the control unit is further configured for different values of depth of field of the first optical subpath and of the second optical subpath. Preferably, the control unit is further configured for variable values of depth of field of the first optical subpath and of the second optical subpath.

Preferably, the control unit is further configured for different values of lateral or axial resolution on the first optical subpath and on the second optical subpath. Preferably, the control unit is further configured for variable values of lateral or axial resolution on the first optical subpath and on the second optical subpath.

Preferably, the control unit is further configured for dual colour detection on the first optical subpath and on the second optical subpath.

Preferably, the functional module comprises a multi-colour beam splitter unit that is preferably formed by a beam splitter for three colours, by a set of dual colour beam splitters or by dielectric mirrors arranged one after another.

That multi-colour beam splitter unit provides multiple channels with individual spectral regions. These are more than two channels. That embodiment of the functional module preferably comprises more than one of the image sensors as described above. The number of the channels and of the optical subpaths is preferably further scaled with a growing number of the image sensors. Alternatively, the functional module comprises an acousto-optical actuator or an interferometer that splits different colours in one channel.

Preferably, the control unit is further configured for a multispectral detection on the first optical subpath and on the second optical subpath.

Preferably, the control unit is further configured for a polarization-sensitive detection on the first optical subpath and on the second optical subpath.

Preferably, the control unit is further configured for a phase-sensitive detection on the first optical subpath and on the second optical subpath.

The microscope according to the invention comprises an objective for gathering light from a sample to be microscopically examined. The microscope further comprises the functional module according to the invention. The mechanical interface of the functional module is mounted to a module support of the microscope. Hence an optical path is established from the objective via the optical interface to the functional module. That optical path is divided into the first optical subpath and the second optical subpath within the functional module.

Preferably, the microscope comprises a preferred embodiment of the functional module according to the invention.

Preferably, the microscope comprises an illumination for illuminating the sample to be microscopically examined.

Additional advantages, details and refinements of the invention will become apparent from the following description of preferred embodiments of the invention, making reference to the drawing. There are shown:
- Fig. 1:: a schematic representation of a first preferred embodiment of a microscope according to the invention; and
- Fig. 2:: a schematic representation of a second preferred embodiment of the microscope according to the invention.

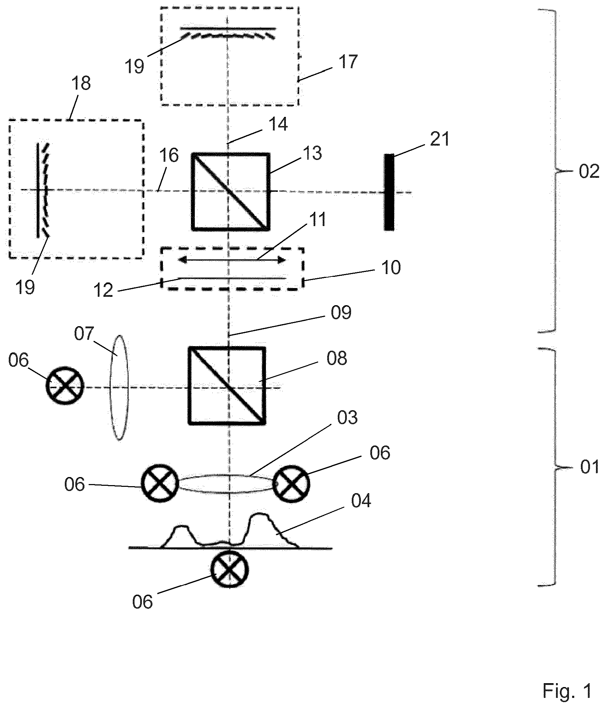

Fig. 1 shows a schematic representation of a first preferred embodiment of a microscope according to the invention. That microscope comprises a base body 01 and a first preferred embodiment of a functional module 02 according to the invention. The base body 01 of the microscope comprises an objective 03 for gathering light from a sample 04 to be microscopically examined. The base body 01 of the microscope further comprises different types of an illumination 06 including a lens 07 and a beam splitter 08 for feeding light of the illumination 06 into an optical path 09 of the microscope.

The functional module 02 comprises a mechanical interface 10 for mounting the functional module 02 onto a module support (not shown) of the base body 01 of the microscope. An intermediate image plane 11 and a pupil 12 form an optical interface that can be located within the mechanical interface 10 and extends the optical path 09 of the base body 01 into the functional module 02. The functional module 02 is removably mounted onto the module support (not shown) of the base body 01 of the microscope. Therefore, the functional module 02 can be replaced by another module (not shown).

The functional module 02 comprises a beam splitter 13 that divides the optical path 09 into a first optical subpath 14 and a second optical subpath 16. The first optical subpath 14 and the second optical subpath 16 are perpendicular to each other. The first optical subpath 14 and the optical path 09 are arranged coaxially.

A first microelectromechanical optical system 17 of the functional module 02 is located on the first optical subpath 14. A second microelectromechanical optical system 18 of the functional module 02 is located on the second optical subpath 16. Each of the microelectromechanical optical systems 17, 18 comprises an array of moveable micromirrors 19. Each of the movable micromirrors 19 shows two degrees of freedom rotation and one degree of freedom translation.

The functional module 02 further comprises an image sensor 21. Light that is reflected by the micromirrors 19 of the first microelectromechanical optical system 17 and the second microelectromechanical optical system 18 is directed via the beam splitter 13 to the image sensor 21.

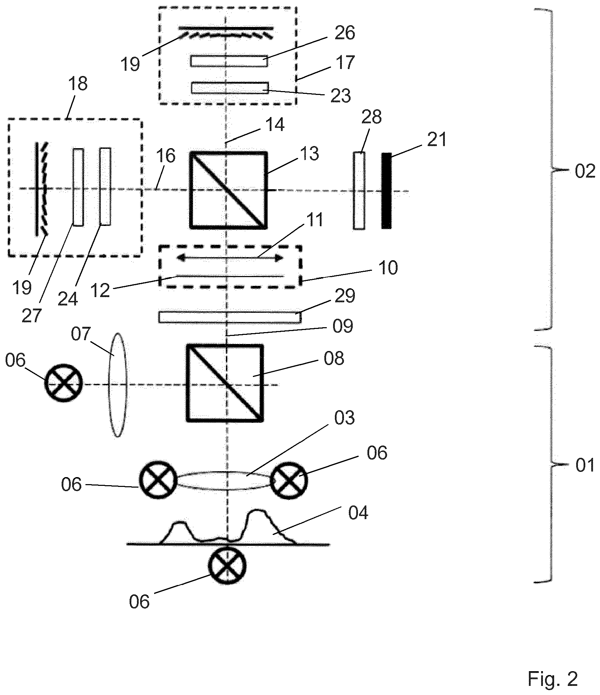

Fig. 2 shows a schematic representation of a second preferred embodiment of the microscope according to the invention. That microscope comprises a second preferred embodiment of the functional module 02 according to the invention. The base body 01 is similar to the embodiment shown in Fig. 1. The second preferred embodiment of the functional module 02 comprises all of the components of the first preferred embodiment of the functional module 02 shown in Fig. 1. Additionally, the beam splitter 13 is polarizing light of the optical path 09. Additionally, the first microelectromechanical optical system 17 comprises a first λ/4 waveplate 23 on the first optical subpath 14. Additionally, the second microelectromechanical optical system 18 comprises a second λ/4 waveplate 24 on the second optical subpath 16.

Furthermore, the first microelectromechanical optical system 17 can comprise a first optical element 26 like a lens or a colour filter on the first optical subpath 14. Further, the second microelectromechanical optical system 18 can comprise a second optical element 27 like a lens or a colour filter on the second optical subpath 16. A third optical element 28 like a lens or a colour filter can be located between the beam splitter 13 and the image sensor 21. A fourth optical element 29 like a lens or a colour filter can be located on the optical path 09.

### List of reference numerals

- 01: base body
- 02: functional module
- 03: objective
- 04: sample
- 05: -
- 06: illumination
- 07: lens
- 08: beam splitter
- 09: optical path
- 10: mechanical interface
- 11: intermediate image plane
- 12: pupil
- 13: beam splitter
- 14: first optical subpath
- 15: -
- 16: second optical subpath
- 17: first microelectromechanical optical system
- 18: second microelectromechanical optical system
- 19: movable micromirrors
- 20: -
- 21: image sensor
- 22: -
- 23: first λ/4 waveplate
- 24: second λ/4 waveplate
- 25: -
- 26: first optical element
- 27: second optical element
- 28: third optical element
- 29: fourth optical element

## Claims

1. Functional module (02) for a microscope, comprising:
- a mechanical interface (10) for removable mounting the functional module (02) to a module support of the microscope;
- an optical interface (11, 12) for establishing an optical path (09) from an objective (03) of the microscope to the functional module (02);
- at least one image sensor (21); and
- a first microelectromechanical optical system (17) and a second microelectromechanical optical system (18), wherein the first microelectromechanical optical system (17) is configured for enhancing a depth of field on a first optical subpath (14) that is directed to the image sensor (21), wherein the second microelectromechanical optical system (18) is configured for enhancing a depth of field on a second optical subpath (16) that is directed to the image sensor (21), and wherein each of the microelectromechanical optical systems (17, 18) is directed to a beam splitter, to a colour beam splitter or to a polarizing beam splitter (13), wherein the beam splitter, the colour beam splitter or the polarizing beam splitter (13) is directed to the image sensor (21).

2. Functional module (02) according to claim 1, **characterized in that** each of the microelectromechanical optical systems (17, 18) comprises an array of moveable micromirrors (19), wherein each of the movable micromirrors (19) shows two degrees of freedom rotation and one degree of freedom translation.

3. Functional module (02) according to claim 1 or 2, **characterized in that** the beam splitter, the colour beam splitter or the polarizing beam splitter (13) is located between the first microelectromechanical optical system (17) and the optical interface (11, 12), and wherein the beam splitter, the colour beam splitter or the polarizing beam splitter (13) is located between the second microelectromechanical optical system (18) and the image sensor (21).

4. Functional module (02) according to one of the claims 1 to 3, **characterized in that** the first optical subpath (14) and the second optical subpath (16) are perpendicular to each other and cross each other within the beam splitter or within the polarizing beam splitter (13).

5. Functional module (02) according to one of the claims 1 to 4, **characterized in that** the first microelectromechanical optical system (17) and the beam splitter, the colour beam splitter or the polarizing beam splitter (13), and the optical interface (11, 12) are arranged on a straight line, wherein the second microelectromechanical optical system (18), the beam splitter, the colour beam splitter or the polarizing beam splitter (13), and the image sensor (21) are arranged on a straight line.

6. Functional module (02) according to one of the claims 1 to 5, **characterized in that** the beam splitter is the polarizing beam splitter (13).

7. Functional module (02) according to one of the claims 1 to 6, **characterized in that** a waveplate (23, 24) is located on the first optical subpath (14) and/or on the second optical subpath (16).

8. Functional module (02) according to one of the claims 1 to 7, **characterized in that** a lens (26, 27, 28, 29), a colour filter, an active acousto-optical modulator, an active electro-optical modulator and/or an interferometric element is located on the first optical subpath (14), on the second optical subpath (16) and/or on the optical path (09).

9. Functional module (02) according to claims 7 or 8, **characterized in that** the waveplate (23, 24), the lens (26, 27, 28, 29), the colour filter, the active acousto-optical modulator, the active electro-optical modulator and/or the interferometric element is located between the first microelectromechanical optical system (17) and the beam splitter (13), between the second microelectromechanical optical system (18) and the beam splitter, the colour beam splitter or the polarizing beam splitter (13), between the beam splitter, the colour beam splitter or the polarizing beam splitter (13) and the image sensor (21) and/or at the optical interface (11, 12).

10. Functional module (02) according to one of the claims 1 to 9, **characterized in that** it further comprises a control unit for a synchronized control of the microelectromechanical optical systems (17, 18) and the image sensor (21).

11. Functional module (02) according to claim 10, **characterized in that** the control unit is further configured for taking a plurality of images with different values of focus resulting in a stack of images.

12. Functional module (02) according to claim 11, **characterized in that** the control unit is further configured for moving the movable micromirrors (19) of the microelectromechanical optical system (17, 18) to form Fresnel lenses with varying values of the focal length.

13. Functional module (02) according to claim 11 or 12, **characterized in that** the control unit is further configured for processing the stack of images to an image with an enhanced depth of field.

14. Microscope, comprising an objective (03) and a functional module (02) according to one of the claims 1 to 13, wherein the mechanical interface (10) of the functional module (02) is mounted to a module support of the microscope.

## Patentansprüche

1. Funktionsmodul (02) für ein Mikroskop, folgendes umfassend:
- eine mechanische Schnittstelle (10) zum abnehmbaren Montieren des Funktionsmoduls (02) an einem Modulträger des Mikroskops;
- eine optische Schnittstelle (11, 12) zum Einrichten eines optischen Wegs (09) von einem Objektiv (03) des Mikroskops zu dem Funktionsmodul (02);
- mindestens einen Bildsensor (21); und
- ein erstes mikroelektromechanisches optisches System (17) und ein zweites mikroelektromechanisches optisches System (18),
wobei das erste mikroelektromechanische optische System (17) zum Verbessern einer Schärfentiefe auf einem ersten optischen Subweg (14) eingerichtet ist, der auf den Bildsensor (21) gerichtet ist, wobei das zweite mikroelektromechanische optische System (18) zum Verbessern einer Schärfentiefe auf einem zweiten optischen Subweg (16) eingerichtet ist, der auf den Bildsensor (21) gerichtet ist, und wobei jedes der mikroelektromechanischen optischen Systeme (17, 18) auf einen Strahlteiler, auf einen Farbstrahlteiler oder auf einen polarisierenden Strahlteiler (13) gerichtet ist, wobei der Strahlteiler, der Farbstrahlteiler oder der polarisierende Strahlteiler (13) auf den Bildsensor (21) gerichtet ist.

2. Funktionsmodul (02) nach Anspruch 1, **dadurch gekennzeichnet, dass** jedes der mikroelektromechanischen optischen Systeme (17, 18) eine Matrix beweglicher Mikrospiegel (19) umfasst, wobei jeder der beweglichen Mikrospiegel (19) zwei Rotationsfreiheitsgrade und einen Translationsfreiheitsgrad zeigt.

3. Funktionsmodul (02) nach Anspruch 1 oder 2, **dadurch gekennzeichnet, dass** der Strahlteiler, der Farbstrahlteiler oder der polarisierende Strahlteiler (13) zwischen dem ersten mikroelektromechanischen optischen System (17) und der optischen Schnittstelle (11, 12) lokalisiert ist und wobei der Strahlteiler, der Farbstrahlteiler oder der polarisierende Strahlteiler (13) zwischen dem zweiten mikroelektromechanischen optischen System (18) und dem Bildsensor (21) lokalisiert ist.

4. Funktionsmodul (02) nach einem der Ansprüche 1 bis 3, **dadurch gekennzeichnet, dass** der erste optische Subweg (14) und der zweite optische Subweg (16) senkrecht zueinander sind und sich einander in dem Strahlteiler oder in dem polarisierenden Strahlteiler (13) kreuzen.

5. Funktionsmodul (02) nach einem der Ansprüche 1 bis 4, **dadurch gekennzeichnet, dass** das erste mikroelektromechanische optische System (17) und der Strahlteiler, der Farbstrahlteiler oder der polarisierende Strahlteiler (13) sowie die optische Schnittstelle (11, 12) auf einer geraden Linie angeordnet sind, wobei das zweite mikroelektromechanische optische System (18), der Strahlteiler, der Farbstrahlteiler oder der polarisierende Strahlteiler (13) sowie der Bildsensor (21) auf einer geraden Linie angeordnet sind.

6. Funktionsmodul (02) nach einem der Ansprüche 1 bis 5, **dadurch gekennzeichnet, dass** der Strahlteiler der polarisierende Strahlteiler (13) ist.

7. Funktionsmodul (02) nach einem der Ansprüche 1 bis 6, **dadurch gekennzeichnet, dass** eine Verzögerungsplatte (23, 24) auf dem ersten optischen Subweg (14) und/oder auf dem zweiten optischen Subweg (16) lokalisiert ist.

8. Funktionsmodul (02) nach einem der Ansprüche 1 bis 7, **dadurch gekennzeichnet, dass** eine Linse (26, 27, 28, 29), ein Farbfilter, ein aktiver akustooptischer Modulator, ein aktiver elektrooptischer Modulator und/oder ein interferometrisches Element auf dem ersten optischen Subweg (14), auf dem zweiten optischen Subweg (16) und/oder auf dem optischen Weg (09) lokalisiert sind.

9. Funktionsmodul (02) nach den Ansprüchen 7 oder 8, **dadurch gekennzeichnet, dass** die Verzögerungsplatte (23, 24), die Linse (26, 27, 28, 29), der Farbfilter, der aktive akustooptische Modulator, der aktive elektrooptische Modulator und/oder das interferometrische Element zwischen dem ersten mikroelektromechanischen optischen System (17) und dem Strahlteiler (13), zwischen dem zweiten mikroelektromechanischen optischen System (18) und dem Strahlteiler, dem Farbstrahlteiler oder dem polarisierenden Strahlteiler (13), zwischen dem Strahlteiler, dem Farbstrahlteiler oder dem polarisierenden Strahlteiler (13) und dem Bildsensor (21) und/oder an der optischen Schnittstelle (11, 12) lokalisiert sind.

10. Funktionsmodul (02) nach einem der Ansprüche 1 bis 9, **dadurch gekennzeichnet, dass** es weiterhin eine Steuerungseinheit für eine synchronisierte Steuerung der mikroelektromechanischen optischen Systeme (17, 18) und des Bildsensors (21) umfasst.

11. Funktionsmodul (02) nach Anspruch 10, **dadurch gekennzeichnet, dass** die Steuerungseinheit weiterhin zum Aufnehmen mehrerer Bilder mit verschiedenen Brennpunktwerten eingerichtet ist, was zu einem Bilderstapel führt.

12. Funktionsmodul (02) nach Anspruch 11, **dadurch gekennzeichnet, dass** die Steuerungseinheit weiterhin zum Bewegen der beweglichen Mikrospiegel (19) des mikroelektromechanischen optischen Systems (17, 18) eingerichtet ist, um Fresnel-Linsen mit variierenden Brennweitenwerten auszubilden.

13. Funktionsmodul (02) nach Anspruch 11 oder 12, **dadurch gekennzeichnet, dass** die Steuerungseinheit weiterhin zum Verarbeiten des Bilderstapels in ein Bild mit einer verbesserten Schärfentiefe eingerichtet ist.

14. Mikroskop, ein Objektiv (03) und ein Funktionsmodul (02) nach einem der Ansprüche 1 bis 13 umfassend, wobei die mechanische Schnittstelle (10) des Funktionsmoduls (02) an einem Modulträger des Mikroskops montiert ist.

## Revendications

1. Module fonctionnel (02) pour microscope, comprenant :
- une interface mécanique (10) pour le montage amovible du module fonctionnel (02) sur un support de module du microscope ;
- une interface optique (11, 12) pour établir un chemin optique (09) depuis un objectif (03) du microscope jusqu'au module fonctionnel (02) ;
- au moins un capteur d'image (21) ; et
- un premier système optique microélectromécanique (17) et un deuxième système optique microélectromécanique (18),
dans lequel le premier système optique microélectromécanique (17) est configuré pour améliorer la profondeur de champ sur un premier sous-chemin optique (14) qui est dirigé vers le capteur d'image (21), dans lequel le deuxième système optique microélectromécanique (18) est configuré pour améliorer la profondeur de champ sur un deuxième sous-chemin optique (16) qui est dirigé vers le capteur d'image (21), et dans lequel chacun des systèmes optiques microélectromécaniques (17, 18) est dirigé vers un diviseur de faisceau, vers un diviseur de faisceau de couleur ou vers un diviseur de faisceau polarisant (13), dans lequel le diviseur de faisceau, le diviseur de faisceau de couleur ou le diviseur de faisceau polarisant (13) est dirigé vers le capteur d'image (21).

2. Module fonctionnel (02) selon la revendication 1, **caractérisé en ce que** chacun des systèmes optiques microélectromécaniques (17, 18) comprend un réseau de micromiroirs mobiles (19), dans lequel chacun des micromiroirs mobiles (19) présente deux degrés de liberté en rotation et un degré de liberté en translation.

3. Module fonctionnel (02) selon la revendication 1 ou 2, **caractérisé en ce que** le diviseur de faisceau, le diviseur de faisceau de couleur ou le diviseur de faisceau polarisant (13) est situé entre le premier système optique microélectromécanique (17) et l'interface optique (11, 12), et dans lequel le diviseur de faisceau, le diviseur de faisceau de couleur ou le diviseur de faisceau polarisant (13) est situé entre le deuxième système optique microélectromécanique (18) et le capteur d'image (21).

4. Module fonctionnel (02) selon l'une des revendications 1 à 3, **caractérisé en ce que** le premier sous-chemin optique (14) et le deuxième sous-chemin optique (16) sont perpendiculaires entre eux et se croisent dans le diviseur de faisceau ou dans le diviseur de faisceau polarisant (13).

5. Module fonctionnel (02) selon l'une des revendications 1 à 4, **caractérisé en ce que** le premier système optique microélectromécanique (17) et le diviseur de faisceau, le diviseur de faisceau de couleur ou le diviseur de faisceau polarisant (13) et l'interface optique (11, 12) sont disposés sur une ligne droite, dans lequel le deuxième système optique microélectromécanique (18), le diviseur de faisceau, le diviseur de faisceau de couleur ou le diviseur de faisceau polarisant (13) et le capteur d'image (21) sont disposés sur une ligne droite.

6. Module fonctionnel (02) selon l'une des revendications 1 à 5, **caractérisé en ce que** le diviseur de faisceau est le diviseur de faisceau polarisant (13).

7. Module fonctionnel (02) selon l'une des revendications 1 à 6, **caractérisé en ce qu'**une lame d'onde (23, 24) est située sur le premier sous-chemin optique (14) et/ou sur le deuxième sous-chemin optique (16).

8. Module fonctionnel (02) selon l'une des revendications 1 à 7, **caractérisé en ce qu'**une lentille (26, 27, 28, 29), un filtre de couleur, un modulateur acousto-optique actif, un modulateur électro-optique actif et/ou un élément interférométrique est situé sur le premier sous-chemin optique (14), sur le deuxième sous-chemin optique (16) et/ou sur le chemin optique (09).

9. Module fonctionnel (02) selon la revendication 7 ou 8, **caractérisé en ce que** la lame d'onde (23, 24), la lentille (26, 27, 28, 29), le filtre de couleur, le modulateur acousto-optique actif, le modulateur électro-optique actif et/ou l'élément interférométrique est situé entre le premier système optique microélectromécanique (17) et le diviseur de faisceau (13), entre le deuxième système optique microélectromécanique (18) et le diviseur de faisceau, le diviseur de faisceau de couleur ou le diviseur de faisceau polarisant (13), entre le diviseur de faisceau, le diviseur de faisceau de couleur ou le diviseur de faisceau polarisant (13) et le capteur d'image (21) et/ou à l'interface optique (11, 12).

10. Module fonctionnel (02) selon l'une des revendications 1 à 9, **caractérisé en ce qu'**il comprend en outre une unité de contrôle pour un contrôle synchronisé des systèmes optiques microélectromécaniques (17, 18) et du capteur d'images (21).

11. Module fonctionnel (02) selon la revendication 10, **caractérisé en ce que** l'unité de contrôle est en outre configurée pour prendre une pluralité d'images avec différentes valeurs de focalisation, résultant en une pile d'images.

12. Module fonctionnel (02) selon la revendication 11, **caractérisé en ce que** l'unité de contrôle est en outre configurée pour déplacer les micromiroirs mobiles (19) du système optique microélectromécanique (17, 18) pour former des lentilles de Fresnel avec des valeurs variables de distance focale.

13. Module fonctionnel (02) selon la revendication 11 ou 12, **caractérisé en ce que** l'unité de contrôle est en outre configurée pour traiter la pile d'images en une image avec une profondeur de champ améliorée.

14. Microscope comprenant un objectif (03) et un module fonctionnel (02) selon l'une des revendications 1 à 13, dans lequel l'interface mécanique (10) du module fonctionnel (02) est montée sur un support de module du microscope.
